# EUROPEAN PATENT APPLICATION

(11) **EP 4 597 165 A1**
(43) Date of publication of application: **06.08.2025**
(21) Application number: 23872555.0
(22) Date of filing: 28.09.2023
(51) Int. Cl.: G01S 7/537, G01S 15/931

(54) **OBJECT DETECTION DEVICE**

(30) Priority: 30.09.2022 JP 2022157358
(71) Applicant: AISIN CORPORATION, Kariya-shi, Aichi 448-8650 (JP); HONDA MOTOR CO., LTD., Tokyo 105-8404 (JP)
(72) Inventor: OMURA, Akihiro, Kariya-shi, Aichi 448-8650 (JP); SAKIUCHI, Takuya, Kariya-shi, Aichi 448-8650 (JP); WATANABE, Tatsuya, Tokyo 107-8556 (JP); TOSHIMA, Kohei, Tokyo 107-8556 (JP)
(74) Representative: TBK
(86) International application number: PCT/JP2023/035510
(87) International publication number: WO 2024/071335

(57) **Abstract**

An object detection device according to an embodiment is an object detection device installed in a vehicle to detect an object present around the vehicle, the object detection device including: a control unit that controls a transmission/reception unit that transmits a transmission wave and receives a reception wave generated by reflection of the transmission wave against the object, the control unit controlling the transmission/reception unit to transmit the transmission wave at a predetermined transmission timing; and a determination unit that determines a random time as a standby time for shifting the transmission timing, the random time being determined in accordance with a shift position that is a position of a shift lever for switching a transmission of the vehicle. The control unit controls the transmission/reception unit to transmit the transmission wave at a new transmission timing obtained by delaying the transmission timing by the determined random time.

## Description

### TECHNICAL FIELD

Embodiments described herein relate generally to an object detection device.

### BACKGROUND ART

In a vehicle control system or the like, an object detection device has been used, which detects an object present around a vehicle by transmitting a transmission wave such as an ultrasonic wave from the vehicle and receiving a reception wave (reflected wave) generated by reflection of the transmission wave against the object.

In such an object detection device, when a given relation regarding transmission timing of ultrasonic wave is made between a host vehicle and another vehicle, there may occur interference by which an ultrasonic wave transmitted by the other vehicle is erroneously recognized as an ultrasonic wave transmitted by the host vehicle. In the conventional art, such interference is avoided by changing the transmission timing of ultrasonic wave in the host vehicle.

### CITATION LIST

### Patent Literature

Patent Document 1: JP 6413620 B2
Patent Document 2: JP 2018-59826 A

### SUMMARY OF INVENTION

### PROBLEM TO BE SOLVED BY THE INVENTION

However, when the host vehicle is subject to interference, the other vehicle is also subject to interference by ultrasonic waves from the host vehicle. Therefore, in the conventional art, in a case where both the host vehicle and the other vehicle are equipped with the same object detection devices whose method for avoiding interference is the same, both the host vehicle and the other vehicle avoid interference against one another, and, as a result, transmission timings of ultrasonic waves eventually coincide with each other, making it impossible to avoid interference.

### MEANS FOR SOLVING PROBLEM

An object detection device according to an embodiment is an object detection device installed in a vehicle to detect an object present around the vehicle, the object detection device including: a control unit that controls a transmission/reception unit that transmits a transmission wave and receives a reception wave generated by reflection of the transmission wave against the object, the control unit controlling the transmission/reception unit to transmit the transmission wave at a predetermined transmission timing; and a determination unit that determines a random time as a standby time for shifting the transmission timing, the random time being determined in accordance with a shift position that is a position of a shift lever for switching a transmission of the vehicle. The control unit controls the transmission/reception unit to transmit the transmission wave at a new transmission timing obtained by delaying the transmission timing by the determined random time.

### EFFECT OF THE INVENTION

According to the embodiment of the present invention, as an example, even if another vehicle is equipped with the same object detection device as the host vehicle, it is possible to reliably avoid interference between ultrasonic waves because the random time is delayed in accordance with the shift position.

### BRIEF DESCRIPTION OF DRAWINGS

FIG. 1 is a top view illustrating an example of a configuration of a vehicle according to an embodiment;
FIG. 2 is a block diagram illustrating an example of a hardware configuration of a vehicle control system according to an embodiment;
FIG. 3 is a block diagram illustrating an example of a functional configuration of an object detection device according to the present embodiment;
FIG. 4A is a diagram illustrating an example of a random table in a case where a shift position is D indicating forward movement;
FIG. 4B is a diagram illustrating an example of a random table in a case where a shift position is R indicating backward movement;
FIG. 4C is a diagram illustrating an example of a random table in a case where a shift position is P indicating parking;
FIG. 5 is a flowchart illustrating an example of a procedure of ultrasonic wave transmission processing according to the present embodiment;
FIG. 6 is a diagram illustrating an example of transmission timing of ultrasonic wave shifted by a random time in a conventional object detection device; and
FIG. 7 is a diagram illustrating an example of transmission timing of ultrasonic wave shifted by a random time in a conventional object detection device.

### DESCRIPTION OF EMBODIMENTS

Hereinafter, embodiments of the present disclosure will be described with reference to the drawings. The configurations of the embodiments described below and the functions and effects brought about by the configurations are merely examples, and the present invention is not limited to the following description.

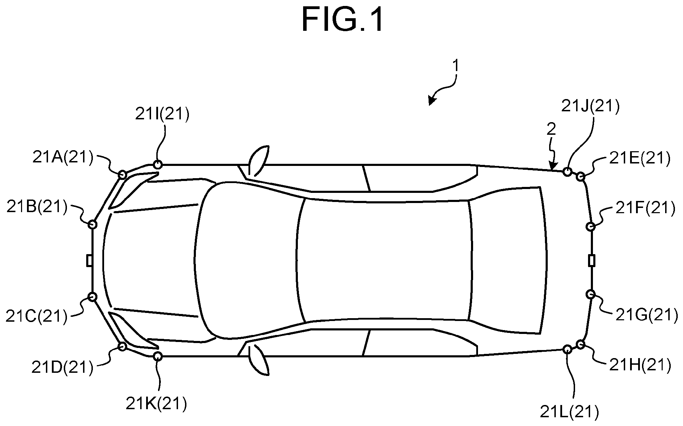

FIG. 1 is a top view illustrating an example of a configuration of a vehicle 1 according to an embodiment. The vehicle 1 is an example of a moving body in which an object detection device according to the present embodiment is installed. The object detection device according to the present embodiment is a device that detects an object present around the vehicle 1 based on information such as a time of flight (TOF) and a Doppler shift acquired by transmitting a transmission wave from the vehicle 1 and receiving a reception wave (reflected wave) generated by reflection of the transmission wave against the object.

The object detection device according to the present embodiment is connected to a plurality of transmission/reception units 21A to 21L. Here, in a case where it is not necessary to distinguish the transmission/reception units 21A to 21L, they are hereinafter referred to as transmission/reception units 21.

Each of the transmission/reception units 21 is installed on a vehicle body 2 as an exterior of the vehicle 1, transmits an ultrasonic wave (an example of a transmission wave) outward of the vehicle body 2, and receives a reflected wave from the object present outside the vehicle body 2 as a reception wave. In the example illustrated in FIG. 1, four transmission/reception units 21A to 21D are arranged at a front end part of the vehicle body 2, four transmission/reception units 21E to 21H are arranged at a rear end part of the vehicle body 2, two transmission/reception units 21I and 21J are arranged on a right side surface part of the vehicle body 2, and two transmission/reception units 21K and 21L are arranged on a left side surface part of the vehicle body 2. Note that the number of the transmission/reception units 21 and the installation positions of the transmission/reception units 21 are not limited to the present example.

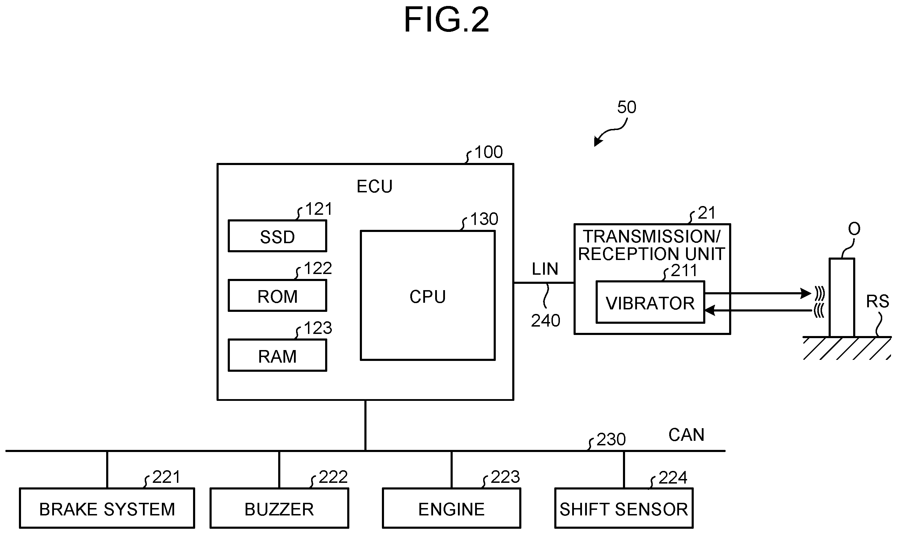

FIG. 2 is a block diagram illustrating an example of a hardware configuration of a vehicle control system 50 according to an embodiment. The vehicle control system 50 performs processing for controlling the vehicle 1 based on information output from the transmission/reception units 21. The vehicle control system 50 according to the present embodiment mainly includes an electronic control unit (ECU) 100, the transmission/reception units 21, a brake system 221, a buzzer 222, an engine 223, and a shift sensor 224.

The ECU 100 and each of the transmission/reception units 21 are connected to each other by a local interconnect network (LIN) 240, which is an in-vehicle network. In addition, the ECU 100, the brake system 221, the buzzer 222, the engine 223, and a shift sensor 224 are connected to each other by a controller area network (CAN) 230, which is an in-vehicle network.

Each of the transmission/reception units 21 includes a vibrator 211 configured using a piezoelectric element or the like, an amplifier, etc., and the transmission/reception of ultrasonic waves is implemented by vibration of the vibrator 211. Specifically, each of the transmission/reception units 21 transmits, as a transmission wave, an ultrasonic wave generated in accordance with vibration of the vibrator 211, and detects vibration of the vibrator 211 caused by a reflected wave (reception wave) of the transmission wave reflected by an object such as an obstacle O or a road surface RS. The vibration of the vibrator 211 is converted into an electric signal, and a TOF corresponding to a distance from the transmission/reception unit 21 to the obstacle O, Doppler shift information corresponding to a relative speed of the obstacle O, and the like can be acquired based on the electric signal.

Note that, in the example illustrated in FIG. 2, a configuration is exemplified such that both the transmission of the transmission wave and the reception of the reception wave are performed by using the single vibrator 211, whereas the configuration of the transmission/reception unit 21 is not limited thereto. For example, the transmission side and the reception side may be separated, such as a configuration in which a vibrator for transmitting a transmission wave and a vibrator for receiving a reception wave are separately provided.

The ECU 100 is a unit that executes various types of processing for controlling the vehicle 1 based on various types of information. The ECU 100 is capable of controlling the brake system 221, the engine 223, or the like, and outputting a sound to the buzzer 222 by sending a control signal through the CAN 230. Additionally, the ECU 100 is capable of receiving a detection result from the shift sensor 224 or the like via the CAN 230.

As illustrated in FIG. 2, the ECU 100 includes a central processing unit (CPU) 130, a solid state drive (SSD) 121, a read only memory (ROM) 122, and a random access memory (RAM) 123. The ECU 100 is an example of the object detection device. The ECU 100 may also be referred to as the object detection device 100.

The CPU 130 is capable of, for example, performing various types of arithmetic processing and performing control in addition to processing of outputting an alarm to the buzzer 222, detecting an object, and determining whether there is interference with an object. The ROM 122 is a nonvolatile storage device. In the ROM 122, a program is stored in advance. The CPU 130 can read the program stored in the ROM 122 and execute arithmetic processing in accordance with the program.

The RAM 123 temporarily stores various types of data used in the calculation of the CPU 130. The SSD 121 is a rewritable nonvolatile storage unit, and is capable of storing data even when the power supply of the ECU 100 is turned off. The CPU 130, the ROM 122, the RAM 123, and the like may be integrated in the same package. In addition, the ECU 100 may have a configuration in which another logical operation processor such as a digital signal processor (DSP), a logic circuit, or the like is used instead of the CPU 130. In addition, a hard disk drive (HDD) may be provided instead of the SSD 121, and the SSD 121 or the HDD may be provided separately from the ECU 100.

The brake system 221 is, for example, an anti-lock brake system (ABS) that suppresses a lock of a brake, an electronic stability control (ESC) that suppresses a cornering skid of the vehicle 1, an electric brake system that enhances a braking force (executes brake assist), a brake by wire (BBW), or the like.

The engine 223 is a prime mover that drives the vehicle 1. The buzzer 222 is provided inside the vehicle 1, and outputs an alarm. The shift sensor 224 detects a shift position, which is a position of a shift lever for switching a transmission of the vehicle 1, and makes notification to the ECU 100.

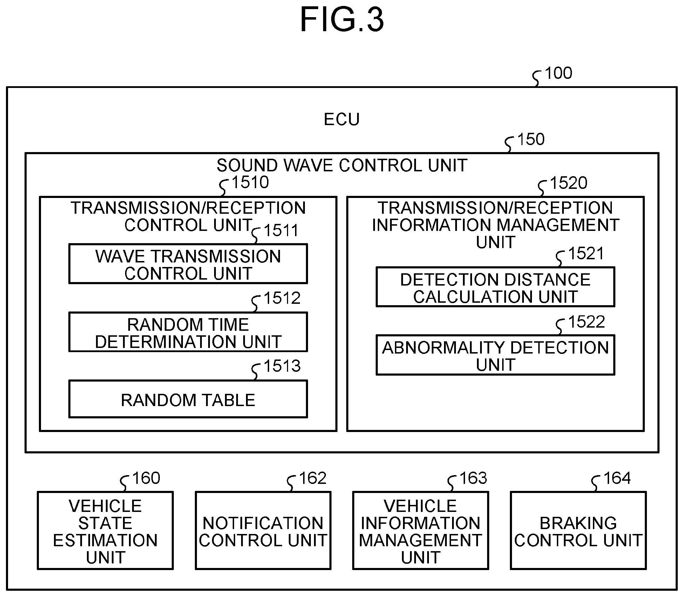

Next, a functional configuration of the object detection device (the ECU) 100 will be described. FIG. 3 is a block diagram illustrating an example of the functional configuration of the object detection device 100 according to the present embodiment. As illustrated in FIG. 3, the object detection device 100 according to the present embodiment has a functional configuration mainly including a sound wave control unit 150, a vehicle state estimation unit 160, a notification control unit 162, a vehicle information management unit 163, and a braking control unit 164.

The vehicle state estimation unit 160 estimates various states of the vehicle 1. When the vehicle 1 is approaching the object, namely, when an abnormality detection unit 1522 to be described later determines that the distance to the object calculated by the detection distance calculation unit 1521 to be described later is smaller than or equal to a predetermined distance based on ultrasonic waves transmitted and received by the transmission/reception unit 21, the notification control unit 162 issues a notification by outputting an alarm from the buzzer 222. The vehicle information management unit 163 manages various types of information of the vehicle 1. The braking control unit 164 controls braking to be performed by the brake system 221.

The sound wave control unit 150 controls transmission of ultrasonic waves by the transmission/reception unit 21, and manages information based on reflected waves received by the transmission/reception unit 21. As illustrated in FIG. 3, the sound wave control unit 150 includes a transmission/reception control unit 1510 and a transmission/reception information management unit 1520.

The transmission/reception control unit 1510 controls transmission/reception of ultrasonic waves performed by the transmission/reception unit 21. As illustrated in FIG. 3, the transmission/reception control unit 1510 includes a wave transmission control unit 1511, a random time determination unit 1512, and a random table 1513.

The wave transmission control unit 1511 controls the transmission/reception unit to transmit an ultrasonic wave at a predetermined transmission timing. More specifically, the wave transmission control unit 1511 controls the transmission/reception unit 21 to transmit an ultrasonic wave at a new transmission timing delayed by a random time determined by the random time determination unit 1512 to be described later. Here, the random time is a standby time for shifting the transmission timing of ultrasonic wave. The wave transmission control unit 1511 is an example of a control unit.

The random time determination unit 1512 receives, from the shift sensor 224, an input of the shift position detected by the shift sensor 224. Then, the random time determination unit 1512 determines a random time in accordance with the input shift position. The random time determination unit 1512 is an example of a determination unit.

Specifically, by referring to the random table 1513, the random time determination unit 1512 determines a random time for ultrasonic waves as transmission waves from the transmission/reception units 21A to 21D provided at the front part of the vehicle 1 and a random time for ultrasonic waves from the transmission/reception units 21E to 21H provided at the rear part of the vehicle 1 so as to differentiate between the random times in accordance with the shift position.

The random table 1513 is stored in a storage medium such as the SSD 121. In the random table 1513, a random time (an example of the first random time) for transmission waves from the transmission/reception units 21A to 21D provided at the front part of the vehicle 1 and a random time (an example of the second random time) for transmission waves from the transmission/reception units 21E to 21H provided at the rear part of the vehicle 1 are defined for each shift position.

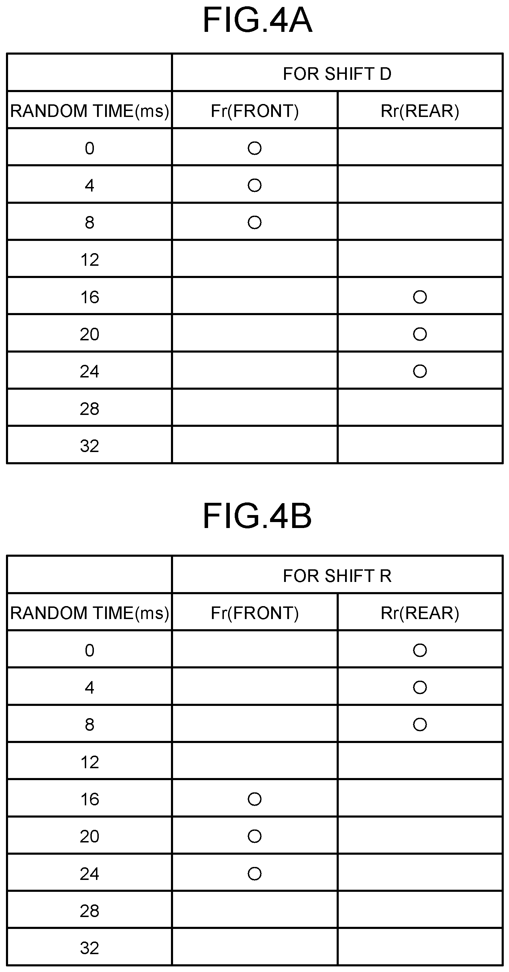

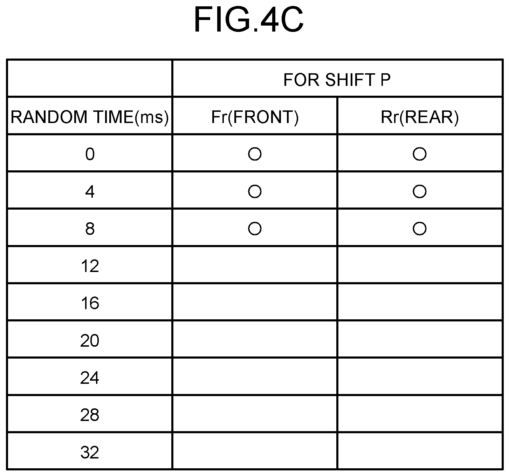

FIGS. 4A to 4C are diagrams each illustrating an example of a random table according to the present embodiment. FIG. 4A is a diagram illustrating an example of a random table in a case where the shift position is D indicating forward movement. FIG. 4B is a diagram illustrating an example of a random table in a case where the shift position is R indicating backward movement. FIG. 4C is a diagram illustrating an example of a random table in a case where the shift position is P indicating parking.

In FIGS. 4A to 4C, a random time for Fr (front) is a random time (the first random time) for transmission waves (namely, ultrasonic waves) from the transmission/reception units 21A to 21D provided at the front part of the vehicle 1, and a random time for Rr (rear) is a random time (the second random time) for transmission waves (namely, ultrasonic waves) from the transmission/reception units 21E to 21H provided at the rear part of the vehicle 1. In addition, three random times are set for each of Fr (front) and Rr (rear), and an optional random time is determined from among the three random times.

As illustrated in FIG. 4A, in a case where the shift position is D, the random time for Fr (the first random time) is set to be shorter than the random time for Rr. In addition, as illustrated in FIG. 4B, in a case where the shift position is R, the random time for Fr (the first random time) is set to be longer than the random time for Rr.

Therefore, in a case where the shift position is D indicating forward movement, the random time determination unit 1512 determines, by referring to the random table 1513, a random time for Fr and a random time for Rr such that the random time for transmission waves from the transmission/reception units 21 for Fr, namely, the transmission/reception units 21A to 21D provided at the front part of the vehicle 1, is shorter than the random time for transmission waves from the transmission/reception units 21 for Rr, namely, the transmission/reception units 21E to 21H provided at the rear part of the vehicle 1.

In addition, in a case where the shift position is R indicating backward movement, the random time determination unit 1512 determines, by referring to the random table 1513, a random time for Fr and a random time for Rr such that the random time for transmission waves from the transmission/reception units 21 for Fr, namely, the transmission/reception units 21A to 21D provided at the front part of the vehicle 1, is longer than the random time for transmission waves from the transmission/reception units 21 for Rr, namely, the transmission/reception units 21E to 21H provided at the rear part of the vehicle 1.

The transmission/reception information management unit 1520 manages information that is based on reflected waves received by the transmission/reception unit 21. As illustrated in FIG. 3, the transmission/reception information management unit 1520 includes a detection distance calculation unit 1521 and an abnormality detection unit 1522.

The detection distance calculation unit 1521 calculates a distance to the object based on the transmission wave transmitted by the transmission/reception unit 21 and the reflected wave received by the transmission/reception unit 21. Note that a known method is used as a method of calculating the distance.

The abnormality detection unit 1522 detects an abnormality in the vehicle 1 or the like. In the present embodiment, when the distance calculated by the detection distance calculation unit 1521 is smaller than or equal to the predetermined distance, the abnormality detection unit 1522 determines that the vehicle is approaching the object. Additionally, the abnormality detection unit 1522 detects whether ultrasonic waves interfere, based on the distance calculated by the detection distance calculation unit 1521. For example, when the abnormality detection unit 1522 detects, three consecutive times, that the distance calculated by the detection distance calculation unit 1521 is smaller than or equal to the predetermined threshold, the abnormality detection unit 1522 determines that ultrasonic waves interfere. Note that the method of detecting interference between ultrasonic waves is not limited thereto.

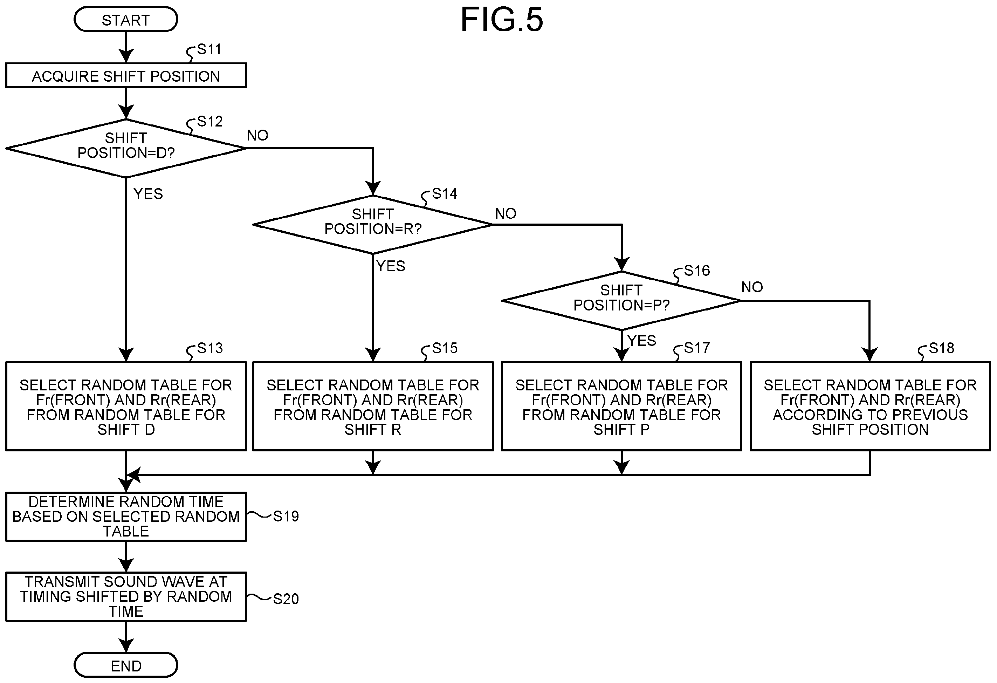

Next, ultrasonic wave transmission processing performed by the object detection device 100 according to the present embodiment configured as described above will be described. FIG. 5 is a flowchart illustrating an example of a procedure of ultrasonic wave transmission processing according to the present embodiment. This transmission processing is performed from the start of traveling of the vehicle 1, and is executed every time when a shift change is detected by the shift sensor 224.

First, the random time determination unit 1512 acquires a current shift position from the shift sensor 224 (S11). Then, the random time determination unit 1512 determines whether the shift position is D or not (S12). When the shift position is D (S12: Yes), the random time determination unit 1512 selects the random table for shift D illustrated in FIG. 4A as a random table for Fr (front) and Rr (rear) (S13).

When the shift position is not D in S12 (S12: No), the random time determination unit 1512 determines whether the shift position is R or not (S14). When the shift position is R (S14: Yes), the random time determination unit 1512 selects the random table for shift R illustrated in FIG. 4B as a random table for Fr (front) and Rr (rear) (S15).

When the shift position is not R in S14 (S14: No), the random time determination unit 1512 determines whether the shift position is P or not (S16). When the shift position is P (S16: Yes), the random time determination unit 1512 selects the random table for shift P illustrated in FIG. 4C as a random table for Fr (front) and Rr (rear) (S17).

When the shift position is not P in S16 (S16: No), the random time determination unit 1512 selects a random table corresponding to the previous shift position as a random table for Fr (front) and Rr (rear) (S18).

In this manner, when the random table is selected in S13, S15, S17, or S18, the random time determination unit 1512 acquires and determines a random time that is set in the selected random table (S19). Next, the wave transmission control unit 1511 controls the transmission/reception unit 21 to transmit an ultrasonic wave at a timing shifted by the random time determined in S19, and, as a result, the transmission/reception unit 21 transmits an ultrasonic wave at the timing shifted by the random time (S20).

Conventionally, an alarm is output by a buzzer in a case where an object is detected by transmitting an ultrasonic wave in a vehicle and a distance to the object is a short distance smaller than or equal to a predetermined distance. Here, when a host vehicle receives an ultrasonic wave transmitted by another vehicle in a state where a given relation regarding transmission timing of ultrasonic wave is made between the host vehicle and the other vehicle, the host vehicle may erroneously recognize the ultrasonic wave as a reflected wave of an ultrasonic wave transmitted by the host vehicle, resulting in so-called interference. Assuming that, for example, the host vehicle and the other vehicle simultaneously transmit ultrasonic waves, the host vehicle erroneously recognizes, as a reflected wave, an ultrasonic wave that is returned from half the distance. Therefore, if an object is in a short distance and is erroneously recognized as being within a buzzer output range, this leads to an erroneous output of the buzzer.

For this reason, as a method of avoiding such erroneous recognition caused by interference, a conventional object detection device determines that interference occurs when the same distance is consecutively detected at a predetermined threshold or more. For example, the object detection device determines that interference occurs when the distance of 30 cm is consecutively detected three times. In a case of the determination that interference occurs, the object detection device can avoid consecutively detecting the same distance by shifting the transmission timing of ultrasonic wave.

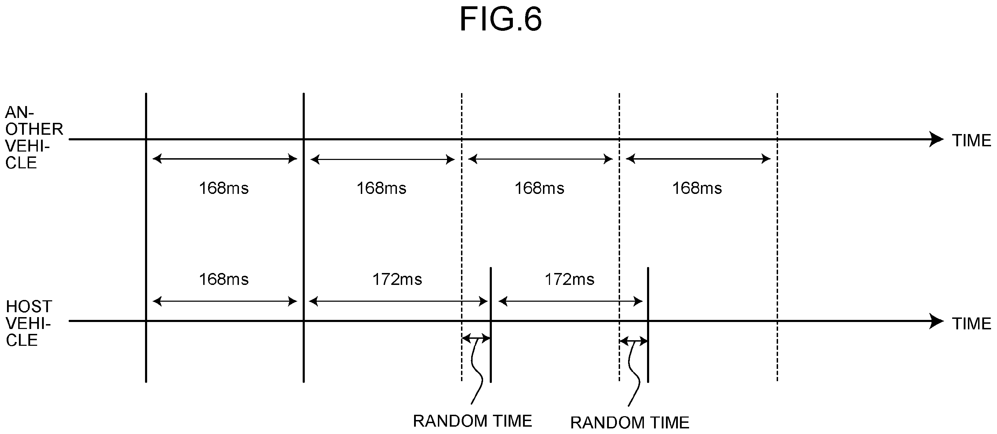

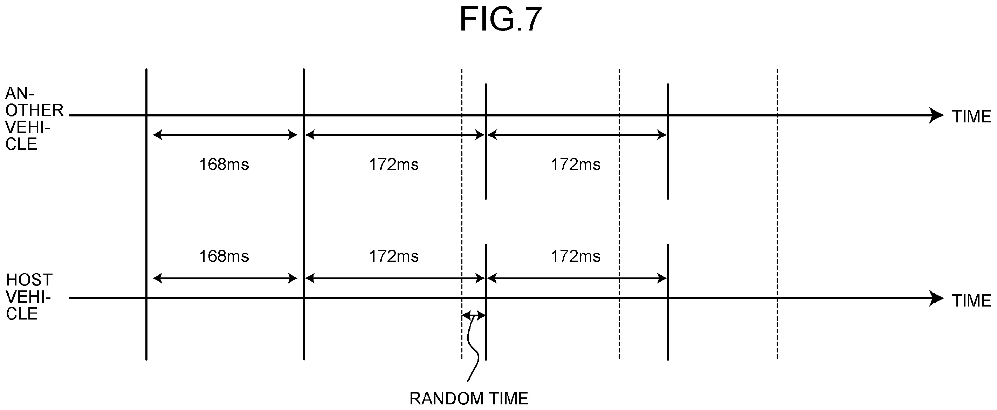

FIGS. 6 and 7 are diagrams each illustrating an example of transmission timing of ultrasonic wave shifted by a random time in the conventional object detection device. As illustrated in FIG. 6, in a case where, for example, ultrasonic waves are transmitted at intervals of 168 ms but determination that interference occurs is made, the object detection device can avoid the interference by transmitting an ultrasonic wave every 172 ms shifted by a random time of 4 ms.

However, when the host vehicle receives an ultrasonic wave from another vehicle, it is often that the other vehicle also receives an ultrasonic wave from the host vehicle. In such a case, a case where object detection devices using the same method as the conventional interference avoidance processing are installed in vehicles will be considered. At this time, even if the object detection device detects that interference occurs and shifts the transmission timing of ultrasonic wave of the host vehicle, in a case where another vehicle shifts the transmission timing in the same manner, there is a possibility that the transmission timings coincide with each other again and interference occurs as illustrated in FIG. 7.

In contrast, in the present embodiment, the random time determination unit 1512 determines a random time as a standby time for shifting a transmission timing in accordance with a shift position that is a position of a shift lever that switches a transmission of the vehicle 1, and the wave transmission control unit 1511 controls the transmission/reception unit 21 to transmit an ultrasonic wave at a new transmission timing obtained by delaying the transmission timing by the determined random time. Therefore, according to the present embodiment, even if another vehicle is equipped with the same object detection device as the host vehicle, it is possible to reliably avoid interference between ultrasonic waves because the random time is delayed in accordance with the shift position.

In addition, in the present embodiment, the random time determination unit 1512 determines the random time for ultrasonic waves from the transmission/reception units 21A to 21D provided at the front part of the vehicle 1 and the random time for ultrasonic waves from the transmission/reception units 21E to 21H provided at the rear part of the vehicle 1, so as to differentiate between them. Therefore, according to the present embodiment, even if another vehicle is equipped with the same object detection device as the host vehicle, the random time for the transmission/reception units 21A to 21D at the front part of the vehicle 1 and the random time for the transmission/reception units 21E to 21H at the rear part of the vehicle 1 are different from each other. Therefore, even when the host vehicle follows another vehicle, it is possible to more reliably avoid interference between ultrasonic waves.

In addition, in the present embodiment, in a case where the shift position is D indicating forward movement, the random time determination unit 1512 determines a random time for Fr and a random time for Rr such that the random time for Fr (front), namely, the random time (first random time) for ultrasonic waves from the transmission/reception units 21 provided at the front part of the vehicle 1 is shorter than the random time for Rr (rear), namely, the random time (second random time) for ultrasonic waves from the transmission/reception units 21 provided at the rear part of the vehicle 1. Therefore, according to the present embodiment, when the vehicle 1 is moving forward, since the random time for Fr is shorter than the random time for Rr, the transmission timing of ultrasonic wave at Fr is earlier than the transmission timing of ultrasonic wave at Rr, making it possible to reliably avoid interference between ultrasonic waves after performing object detection with higher accuracy.

In addition, in the present embodiment, in a case where the shift position is R indicating backward movement, the random time determination unit 1512 determines a random time for Fr and a random time for Rr such that the random time for Fr (front), namely, the random time (first random time) for ultrasonic waves from the transmission/reception units 21 provided at the front part of the vehicle 1 is longer than the random time for Rr (rear), namely, the random time (second random time) for ultrasonic waves from the transmission/reception units 21 provided at the rear part of the vehicle 1. Therefore, according to the present embodiment, when the vehicle 1 is moving backward, since the random time for Fr is longer than the random time for Rr, the transmission timing of ultrasonic wave at Rr is earlier than the transmission timing of ultrasonic wave at Fr, making it possible to reliably avoid interference between ultrasonic waves after performing object detection with higher accuracy.

In the present embodiment, the SSD 121 is included, the SSD 121 storing the random table 1513 in which a random time for Fr and a random time for Rr are defined for each shift position, and the random time determination unit 1512 determines a random time for Fr and a random time for Rr based on the shift position and the random table 1513. Therefore, according to the present embodiment, since the random time can be determined by switching the random table, it is possible to easily and more reliably avoid interference between ultrasonic waves.

In the above-described embodiment, the CPU 130 reads and executes the program stored in the storage device such as the ROM 122 or the SSD 121, thereby implementing various functional modules such as the wave transmission control unit 1511, the random time determination unit 1512, the detection distance calculation unit 1521, the abnormality detection unit 1522, the vehicle state estimation unit 160, the notification control unit 162, the vehicle information management unit 163, and the braking control unit 164. However, the present invention is not limited thereto. For example, various functional modules such as the wave transmission control unit 1511, the random time determination unit 1512, the detection distance calculation unit 1521, the abnormality detection unit 1522, the vehicle state estimation unit 160, the notification control unit 162, the vehicle information management unit 163, and the braking control unit 164 can be implemented by independent hardware.

Note that the object detection program executed by the object detection device 100 according to the above-described embodiment is provided by being pre-installed in the ROM or the like.

The object detection program executed by the object detection device 100 according to the above-described embodiment may be provided by being recorded in a computer-readable recording medium such as a CD-ROM, a flexible disk (FD), a CD-R, or a digital versatile disk (DVD) as a file in an installable format or an executable format.

Moreover, the object detection program executed by the object detection device 100 according to the above-described embodiment may be stored on a computer connected to a network such as the Internet and provided by being downloaded via the network. In addition, the object detection program executed by the object detection device 100 according to the above-described embodiment may be provided or distributed via a network such as the Internet.

The object detection program executed by the object detection device 100 according to the above-described embodiment has a module configuration including the above-described units (the wave transmission control unit 1511, the random time determination unit 1512, the detection distance calculation unit 1521, the abnormality detection unit 1522, the vehicle state estimation unit 160, the notification control unit 162, the vehicle information management unit 163, the braking control unit 164, etc.). As actual hardware, the CPU reads the object detection program from the ROM and executes the object detection program, thereby loading the units onto the main storage device, such that the wave transmission control unit 1511, the random time determination unit 1512, the detection distance calculation unit 1521, the abnormality detection unit 1522, the vehicle state estimation unit 160, the notification control unit 162, the vehicle information management unit 163, the braking control unit 164, and the like are generated on the main storage device.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof fall within the scope and gist of the invention, and fall within the scope of the invention set forth in the claims and equivalents thereof.

### [Summary of Present Embodiment]

An object detection device (100) according to the present embodiment comprises at least the following configuration.

Namely, an object detection device (100) is installed in a vehicle (1) to detect an object present around the vehicle (1), the object detection device (100) including:
a control unit (1511) that controls a transmission/reception unit (21) that transmits a transmission wave and receives a reception wave generated by reflection of the transmission wave against the object, the control unit controlling the transmission/reception unit (21) to transmit the transmission wave at a predetermined transmission timing; and
a determination unit (1512) that determines a random time as a standby time for shifting the transmission timing, the random time being determined in accordance with a shift position that is a position of a shift lever for switching a transmission of the vehicle (1), in which
the control unit (1511) controls the transmission/reception unit (21) to transmit the transmission wave at a new transmission timing obtained by delaying the transmission timing by the determined random time.

With the configuration above, as an example, even if another vehicle is equipped with the same object detection device (100) as the host vehicle, it is possible to reliably avoid interference between ultrasonic waves because the random time is delayed in accordance with the shift position.

Moreover, in the object detection device (100) according to the embodiment, the determination unit (1512) differentiates between a random time for the transmission wave from the transmission/reception unit (21) provided at a front part of the vehicle (1) and a random time for the transmission wave from the transmission/reception unit (21) provided at a rear part of the vehicle (1).

With the configuration above, as an example, even if another vehicle is equipped with the same object detection device (100) as the host vehicle, it is possible to more reliably avoid interference between ultrasonic waves even when the host vehicle follows the other vehicle.

In addition, in the object detection device (100) according to the embodiment, the determination unit (1512) determines a first random time and a second random time such that the first random time is shorter than the second random time when the shift position indicates forward movement, the first random time being the random time for the transmission wave from the transmission/reception unit (21) provided at the front part of the vehicle (1), the second random time being the random time for the transmission wave from the transmission/reception unit (21) provided at the rear part of the vehicle (1).

With the configuration above, as an example, when the vehicle is moving forward, it is possible to reliably avoid interference between ultrasonic waves after performing object detection with higher accuracy.

In addition, in the object detection device (100) according to the embodiment, the determination unit (1512) determines the first random time and the second random time such that the first random time is longer than the second random time when the shift position indicates backward movement.

With the configuration above, as an example, when the vehicle is moving backward, it is possible to reliably avoid interference between ultrasonic waves after performing object detection with higher accuracy.

The object detection device (100) according to the embodiment further includes a storage unit (121) that stores random information (1513) in which the first random time and the second random time are defined for each shift position, and
the determination unit (1512) determines the first random time and the second random time based on the shift position and the random information (1513).

With the configuration above, as an example, it is possible to easily and more reliably avoid interference between ultrasonic waves.

### EXPLANATIONS OF LETTERS OR NUMERALS

1 VEHICLE
21 TRANSMISSION/RECEPTION UNIT
50 VEHICLE CONTROL SYSTEM
100 OBJECT DETECTION DEVICE (ECU)
121 SSD
211 VIBRATOR
150 SOUND WAVE CONTROL UNIT
1510 TRANSMISSION/RECEPTION CONTROL UNIT
1511 WAVE TRANSMISSION CONTROL UNIT
1512 RANDOM TIME DETERMINATION UNIT
1513 RANDOM TABLE
1520 TRANSMISSION/RECEPTION INFORMATION MANAGEMENT UNIT
1521 DETECTION DISTANCE CALCULATION UNIT
1522 ABNORMALITY DETECTION UNIT
160 VEHICLE STATE ESTIMATION UNIT
162 NOTIFICATION CONTROL UNIT
163 VEHICLE INFORMATION MANAGEMENT UNIT
164 BRAKING CONTROL UNIT

## Claims

1. An object detection device installed in a vehicle to detect an object present around the vehicle, the object detection device comprising:
a control unit configured to control a transmission/reception unit that transmits a transmission wave and receives a reception wave generated by reflection of the transmission wave against the object, the control unit controlling the transmission/reception unit to transmit the transmission wave at a predetermined transmission timing; and
a determination unit configured to determine a random time as a standby time for shifting the transmission timing, the random time being determined in accordance with a shift position that is a position of a shift lever for switching a transmission of the vehicle,
wherein the control unit is configured to control the transmission/reception unit to transmit the transmission wave at a new transmission timing obtained by delaying the transmission timing by the determined random time.

2. The object detection device according to claim 1, wherein the determination unit is configured to differentiate between a random time for the transmission wave from the transmission/reception unit provided at a front part of the vehicle and a random time for the transmission wave from the transmission/reception unit provided at a rear part of the vehicle.

3. The object detection device according to claim 2, wherein the determination unit is configured to determine a first random time and a second random time such that the first random time is shorter than the second random time when the shift position indicates forward movement, the first random time being the random time for the transmission wave from the transmission/reception unit provided at the front part of the vehicle, the second random time being the random time for the transmission wave from the transmission/reception unit provided at the rear part of the vehicle.

4. The object detection device according to claim 3, wherein the determination unit is further configured to determine the first random time and the second random time such that the first random time is longer than the second random time when the shift position indicates backward movement.

5. The object detection device according to claim 4, further comprising a storage unit configured to store random information in which the first random time and the second random time are defined for each shift position,
wherein the determination unit is configured to determine the first random time and the second random time based on the shift position and the random information.
